# EUROPÄISCHE PATENTANMELDUNG

(11) **EP 1 949 790 A1**
(43) Veröffentlichungstag der Anmeldung: **30.07.2008**
(21) Anmeldenummer: 08100107.5
(22) Anmeldetag: 04.01.2008
(51) Int. Cl.: A21B 3/13

(54) **Backform**

(30) Priorität: 26.01.2007 DE 202007001159 U
(71) Anmelder: Cofresco Frischhalteprodukte GmbH & Co. KG, 32427 Minden (DE)
(72) Erfinder: ARNING, Hans-Jürgen, 32312, Lübbecke (DE)
(74) Vertreter: Dantz, Jan Henning

(57) **Zusammenfassung**

Eine Backform (1) zur Herstellung von Backwaren, weist einen plattenförmigen Formköper (2) aus einem flexiblen, hitzebeständigen Material auf, an dem eine Vielzahl von Vertiefungen (3) zur Aufnahme von Teig vorgesehen sind, wobei der plattenförmige Formköper (2) zur Lagerung aufrollbar ist. Entsprechend der Anzahl von Vertiefungen (3) kann jeweils ein Gebäckteil hergestellt werden und der Formkörper (2) kann bei Nichtbenutzung aufgerollt werden und besitzt nur ein geringes Stauvolumen.

## Beschreibung

Die vorliegende Erfindung betrifft eine Backform zur Herstellung von Backwaren.

Es gibt Backformen aus Metall, die zur Aufnahme von Teig dienen, damit der Teig dann zur Herstellung eines Gebäckteiles gebacken wird. Solche Backformen benötigen viel Stauraum für die Lagerung und besitzen zudem den Nachteil, dass sie gerade im Kantenbereich schlecht zu reinigen sind.

Es ist daher Aufgabe der vorliegenden Erfindung eine Backform zur Herstellung von Backwaren zu schaffen, die für die Lagerung nur einen geringen Stauraum benötigt und einfach in der Handhabung ist.

Diese Aufgabe wird mit einer Backform mit den Merkmalen des Anspruches 1 gelöst.

Erfindungsgemäß besteht die Backform aus einem plattenförmigen Formkörper aus einem flexiblen, hitzebeständigen Material, an dem eine Vielzahl von Vertiefungen zur Aufnahme von Teig vorgesehen sind. Beim Backen kann dann entsprechend der Anzahl von Vertiefungen jeweils ein Gebäckteil hergestellt werden. Dies vereinfacht die Handhabung, da in jede Vertiefung entsprechend Teig eingefüllt wird, so dass die Vertiefung zur Formgebung des Gebäckteiles beiträgt. Ferner ist der Formkörper aus flexiblem Material zur Lagerung aufrollbar oder faltbar, so dass er nur ein geringes Stauvolumen besitzt.

Gemäß einer bevorzugten Ausgestaltung der Erfindung sind die Vertiefungen streifenförmig angeordnet und zwischen zwei Streifen von Vertiefungen ist eine Knicklinie ausgebildet. Dadurch kann der Benutzer leicht erkennen, wie die Backform gefaltet bzw. aufgerollt werden kann, um sie zu lagern. Die Knicklinien können dabei als rillenförmige Materialschwächungen ausgebildet sein, so dass ein leichtgängiges Falten möglich ist. Dabei können die Knicklinien vorzugsweise an der Oberseite des Formkörpers als ausgesparte Nut ausgebildet sein, so dass sie von oben für den Benutzer sichtbar sind.

In einer vorteilhaften Ausgestaltung sind die Vertiefungen topfförmig mit einem Boden und sich konisch erweiternden Seitenwänden ausgebildet, so dass die Vertiefungen gut von oben befüllt werden können und der Teig dann sich über die Backform nach oben hinaus ausdehnen kann. Die topfförmige Gestaltung der Vertiefungen hat zudem den Vorteil, dass diese leicht zu reinigen sind. Insbesondere kann für den Reinigungsvorgang die Vertiefung auch umgestülpt werden und nach oben gedrückt werden, so dass es leicht zugänglich ist. Durch die flexible Gestaltung des Materials können auch festgebackene Schmutzreste leicht entfernt werden.

Um eine ausreichende Flexibilität zu besitzen weist der plattenförmige Formkörper eine Dicke zwischen 1 mm bis 4 mm, insbesondere 2 mm bis 3 mm auf. Der Formkörper besteht dabei vorzugsweise aus Silikon.

Damit der Formkörper im aufgerollten Zustand eine ausreichende Stabilität aufweist und sich nicht versehentlich wieder entrollt, sind die Vertiefungen vorzugsweise ineinander stapelbar. Aufgrund der Flexibilität des Materials können die Vertiefungen auch gebogen werden und für einen gewissen Formschluss sorgen, der ein Entwickeln des Formkörpers im aufgerollten Zustand verhindert.

Um eine ausreichende Anzahl von Backwaren mit der Backform herzustellen, weist ein Streifen vorzugsweise vier bis sechs Vertiefungen auf, wobei jede Backform vorzugsweise vier bis sechs Streifen an dem plattenförmigen Formkörper aufweist.

Die Erfindung wird nachfolgend anhand eines Ausführungsbeispieles mit Bezug auf die beigefügten Zeichnungen näher erläutert. Es zeigen:
- Figur 1: eine Draufsicht auf ein Ausführungsbeispiel einer erfindungsgemäßen Backform;
- Figur 2: eine Schnittansicht entlang der Linie A-A in Figur 1 ohne die Vertiefungen;
- Figur 3: eine Schnittansicht entlang der Linie B-B in Figur 1 und
- Figur 4: eine Seitenansicht auf die Backform im aufgerollten Zustand.

Eine Backform 1 besteht aus Silikon oder einem anderen flexiblen hitzebeständigen Material und umfasst einen plattenförmigen Formkörper 2, an dem eine Vielzahl von Vertiefungen 3 zur Aufnahme von Teig ausgebildet sind. Die Vertiefungen 3 sind dabei streifenförmig angeordnet, wobei an jedem Streifen 5 jeweils fünf Vertiefungen 3 vorgesehen sind. Die Streifen 5 mit den Vertiefungen 3 sind durch Knicklinien 4 voneinander beabstandet, die ein Falten des Formkörpers 2 erleichtern.

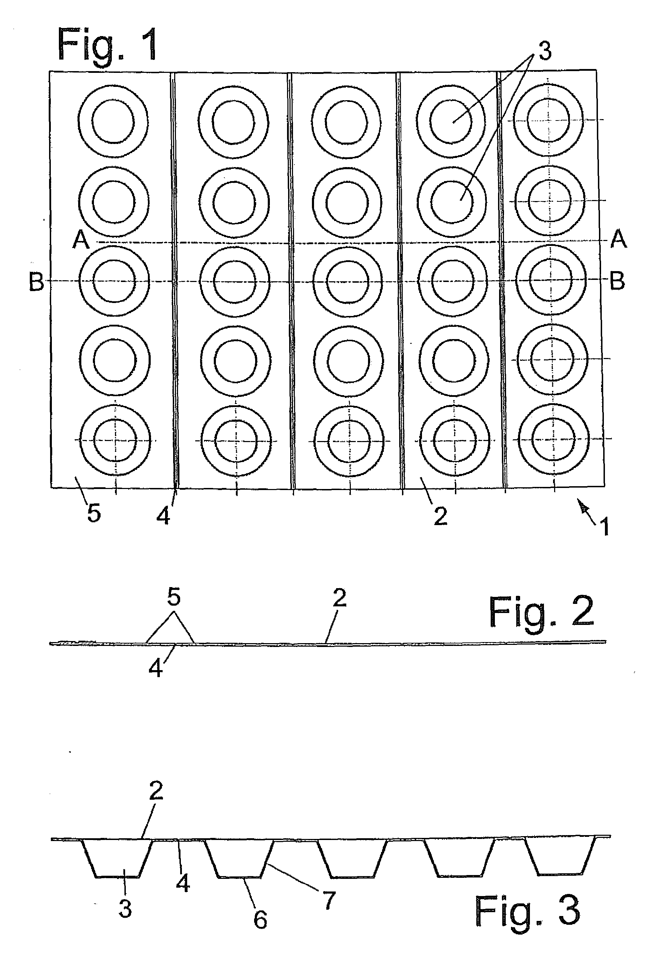

Wie in Figur 2 zu sehen ist, sind die Knicklinien 4 zwischen den Streifen 5 als Materialschwächungen ausgebildet, und zwar als Nuten, die an der Oberseite des Formkörpers 2 ausgespart sind. Dadurch ist das Material im Bereich der Knicklinien 4 dünner und erleichtert ein Verschwenken der Streifen 5 beim Aufrollen. Der plattenförmige Formkörper 2 weist eine Dicke zwischen 1 mm und 4 mm auf, so dass eine einfache Faltung möglich ist.

In Figur 3 ist die Backform 1 in einem Schnitt durch die Vertiefungen 3 dargestellt. Jede Vertiefung 3 umfasst einen Boden 6, der parallel zu der Oberseite des plattenförmigen Formkörpers 2 verläuft. Von dem Boden 6 erstrecken sich konisch aufweitende Seitenwände 7, so dass beim Einfüllen von Teig die Vertiefung 3 gut zugänglich ist.

Nach dem Backen kann die Backform 1 leicht gereinigt werden, wobei es möglich ist, die Vertiefungen 3 nach oben zu drücken und dabei mechanisch die Oberfläche zu säubern. Durch die Flexibilität des Materials können auch angebackene Teigreste leicht entfernt werden.

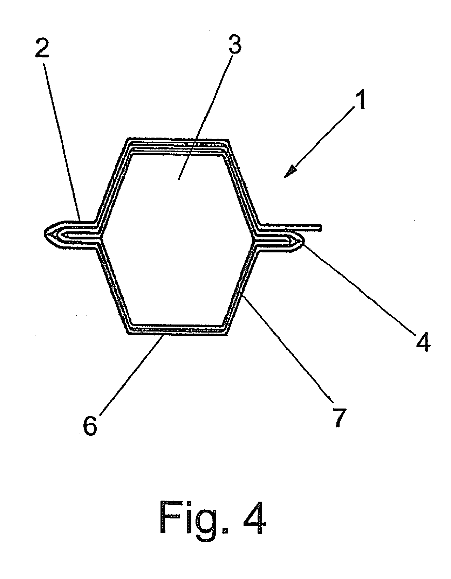

Zur Lagerung der Backform 1 wird diese aufgewickelt, wie dies in Figur 4 dargestellt ist. Hierfür wickelt der Benutzer die Backform 1 auf, in dem der plattenförmige Formkörper 2 um die Knicklinien 4 gefaltet wird, so dass die Vertiefungen 3 ineinander gestapelt werden. Dabei liegen die Böden 6 und Seitenwände 7 der Vertiefungen 3 zumindest teilweise aneinander an und durch das flexible Material wird ein gewisser Formschluss zwischen ineinander gestapelten Vertiefungen 3 bereitgestellt, der ein Entrollen der Backform 1 verhindert. In dieser Position ist die Backform 1 als Rolle ausgebildet und benötigt nur minimalen Stauraum.

In dem gezeigten Ausführungsbeispiel umfasst die Backform 1 fünf Vertiefungen 3 pro Streifen 5 und fünf Streifen 5. Es ist natürlich auch möglich, die Backform 1 mit mehr oder weniger Vertiefungen 3 auszubilden, wobei auch die Anzahl der Streifen 5 variieren kann. Ferner ist es möglich, die Form der Vertiefungen 3 nicht topfförmig auszubilden, was für die Herstellung von Muffins besonders geeignet ist, sondern es können auch andere Formen gewählt werden, beispielsweise für Plätzchen, wie Herzen, Kreuze, Monde etc.

## Patentansprüche

1. Backform (1) zur Herstellung von Backwaren, mit einem plattenförmigen Formköper (2) aus einem flexiblen, hitzebeständigen Material, an dem eine Vielzahl von Vertiefungen (3) zur Aufnahme von Teig vorgesehen sind, wobei der plattenförmige Formköper (2) zur Lagerung aufrollbar ist.

2. Backform nach Anspruch 1, **dadurch gekennzeichnet, dass** die Vertiefungen (3) streifenförmig angeordnet sind und zwischen zwei Streifen (5) von Vertiefungen (3) eine Knicklinie (4) ausgebildet ist.

3. Backform nach Anspruch 1 oder 2, **dadurch gekennzeichnet, dass** die Knicklinien (4) durch rillenförmige Materialschwächungen gebildet sind.

4. Backform nach einem der Ansprüche 1 bis 3, **dadurch gekennzeichnet, dass** die Knicklinien als an einer Oberseite ausgesparte Nut des Formkörpers (2) ausgebildet sind.

5. Backform nach einem der Ansprüche 1 bis 4, **dadurch gekennzeichnet, dass** die Vertiefungen (3) topfförmig mit einem Boden (6) und sich konisch erweiterten Seitenwänden (7) ausgebildet sind.

6. Backform nach einem der Ansprüche 1 bis 5, **dadurch gekennzeichnet, dass** der plattenförmige Formkörper (2) eine Dicke zwischen 1 bis 4 mm, vorzugsweise 2 bis 3 mm aufweist.

7. Backform nach einem der Ansprüche 1 bis 6, **dadurch gekennzeichnet, dass** beim Aufrollen des Formkörpers (2) die Vertiefungen (3) ineinander stapelbar sind.

8. Backform nach einem der Ansprüche 1 bis 7, **dadurch gekennzeichnet, dass** der Formkörper (2) aus Silikon hergestellt ist.

9. Backform nach einem der Ansprüche 1 bis 8, **dadurch gekennzeichnet, dass** in einem Streifen (5) vier bis sechs Vertiefungen (3) und vier bis sechs Streifen (5) an dem Formkörper (2) ausgebildet sind.
